# EUROPEAN PATENT SPECIFICATION

(11) **EP 1 552 675 B1**
(45) Date of publication and mention of the grant of the patent: **20.05.2009**
(21) Application number: 03798304.6
(22) Date of filing: 22.09.2003
(51) Int. Cl.: H04M 3/493, H04M 1/2745

(54) **MOBILE-INITIATED NUMBER INFORMATION QUERY AND DELIVERY**
MOBILEINGELEITETE NUMMERNINFORMATIONSANFRAGE UND ABLIEFERUNG
INTERROGATION ET ACHEMINEMENT D'INFORMATIONS DE NUMEROS COMPOSES DEPUIS UN MOBILE

(30) Priority: 30.09.2002 US 260987
(43) Date of publication of application: 13.07.2005
(73) Proprietor: Sony Ericsson Mobile Communications AB, 221 88 Lund (SE)
(72) Inventor: VASA, Yojak, Morrisville, NC 27560 (US)
(74) Representative: HOFFMANN EITLE
(86) International application number: PCT/IB2003/004093
(87) International publication number: WO 2004/030326

(56) References cited:
- EP-A- 0 996 305
- WO-A-01/79967
- US-A- 5 943 611
- US-A1- 2002 027 981
- US-A1- 2003 017 824

## Description

### BACKGROUND OF THE INVENTION

The present invention relates generally to mobile communication networks, and more particularly, to a method of querying a network database from a mobile station to obtain contact information.

Users of personal communication devices, such as cellular telephones, wireless Personal Digital Assistants (PDAs), and other wireless communication devices, benefit tremendously by their ability to use and store various types of contact information. Contact lists, such as electronic phone or address books allow users of such devices to conveniently store and dial numbers of interest. However, maintaining and updating such contact lists can be tedious at times. For example, a common cellular phone function recognizes when a user dials a "new" number not currently stored in the phone's contact list. Based on such recognition, the phone queries the user as to whether the number should be saved in the contact list for future use. If the user responds affirmatively, the phone adds the new number to the stored contacts list for future use. Of course, the number is stored without benefit of additional directory listing information, e.g., the name/address associated with the number, so the user must often engage in tedious data entry to input complete information for the automatically saved number.

In a typical scenario, the user calls a directory assistance service provided by his or her wireless service provider and is verbally told the number corresponding to a person or business identified by the user.
In a more automated approach to obtaining a telephone number, U.S. Patent No. 5,943,611 teaches sending a name electronically from a mobile station to a network, such as in an electronic message, and receiving a corresponding telephone number in a return transmission. Although such directory assistance services may offer automated call completion to the requested number, many users avoid the additional charges associated with such automated call completion by completing the call on their own. As noted, where the wireless device recognizes the number being dialed as a new number, it generally prompts the user for associated data items such as name and address. Thus, the user ends up manually entering the directory information for the number just obtained from the directory assistance center.

### BRIEF SUMMARY OF THE INVENTION

The present invention provides a method and apparatus enabling mobile-initiated queries of a supporting wireless network for contact information, such as directory listing information. In an exemplary embodiment, a mobile station originates a Short Messaging Services (SMS) request message that specifies a telephone number for which additional information is desired. Upon receiving the request, the network accesses one or more databases, or cooperates with other entities to access the appropriate database(s) and returns one or more data items associated with the telephone number identified in the mobile station's request message. The mobile-initiated request may further specify the particular information desired for the number, and may specify the data format(s) in which the information should be returned by the network. For example, a mobile station might generate an SMS request that identifies a telephone number for which vCard formatted contact information is desired.

In an exemplary embodiment, a mobile station, such as a wireless cellular telephone or wireless PDA, recognizes that the user has entered or otherwise dialed a number not currently stored in its contact list. Based on this recognition, the device queries the user to determine whether the user wishes to save the number into the contact list, and, if so, whether the user wishes the device to obtain and store contact information associated with that number. If the user indicates that such contact information is desired, the device generates an SMS request that identifies the number of interest and may additionally specify the information desired and the data format in which the network should return the information.

The network processes the request received from the device, such as by processing the request at a Short Messaging Services Center (SMSC) or other appropriate network entity, and obtains one or more data items associated with the specified telephone number for return to the initiating device. In support of this data retrieval, the network may access directory listing databases, as well as other databases, both internal and external to the network, as needed or desired. For example, third-party service providers may maintain custom databases related to advertising and sales, e.g., electronic coupons, restaurant menus, etc., that are returned to the device if the queried number is a business number.

### BRIEF DESCRIPTION OF THE DRAWINGS

Fig. 1 illustrates an exemplary wireless communication network providing wireless communication services.
Fig. 2 illustrates an exemplary mobile station served by the wireless communication network of Fig. 1.
Fig. 3 illustrates exemplary operation of the mobile station according to the present invention.
Fig. 4 illustrates exemplary operation of the mobile station regarding retrieval of information for new numbers.
Fig. 5 illustrates an exemplary data record configuration for stored contact information in the mobile station.
Fig. 6 illustrates another exemplary embodiment of the network of Fig. 1.

### DETAILED DESCRIPTION OF THE INVENTION

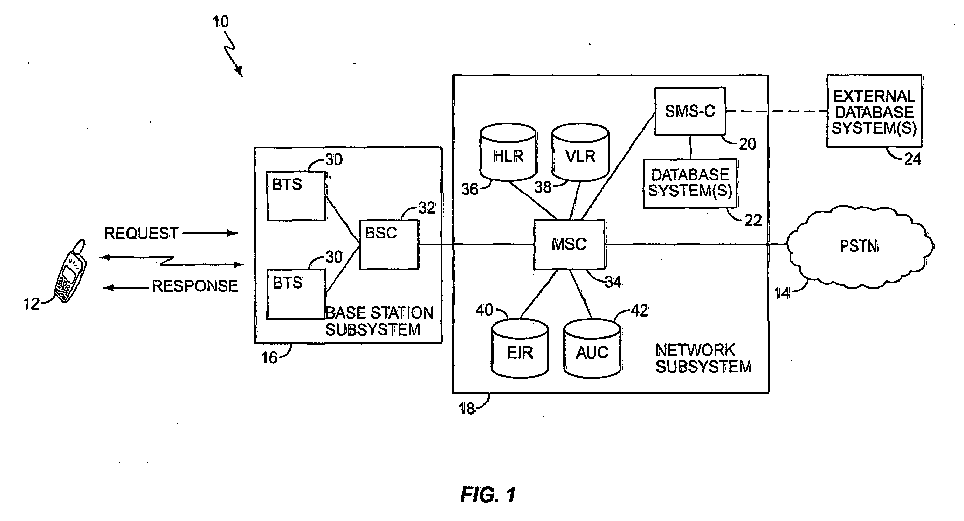

Fig. 1 illustrates a short-messaging services (SMS) system implemented as a wireless communication network 10. Of course, network 10 provides primary communication services that allow a user of a mobile station 12 to communicate with users of the Switch Telephone Network (PSTN) 14. A base station subsystem (BSS) 16 in combination with a network subsystem 18 supports communication between the mobile station 12 and the PSTN 14. Of particular interest with regard to the present invention, network subsystem 18 includes a Short Messaging Services Center (SMSC) 20 having access to one or more database systems, such as network database system 22 and/or external database systems 24. SMSC 20 generally supports short messaging services, e.g., text/data messaging to and from mobile station 12.

These SMS communications as well as voice/data communications to and from PSTN 14 involve wireless signaling between mobile station 12 and BSS 16. In support of such signaling, BSS 16 typically comprises one or more Base Transceiver Systems (BTSs) 30 that are communicatively coupled to one or more Base Station Controllers (BSCs) 32. In turn, the BSC 32 communicatively links the BSS 16 with a Mobile Switching Center (MSC) 34, which is communicatively coupled to SMSC 20 and various other network entities. Such entities typically include a Home Location Register (HLR) 36, a Visitor Location Register (VLR) 38, an Equipment Identification Register (EIR) 40, and an Authentication Center (AuC) 42. As illustrated, the architecture of network 10 is consistent with an implementation based on Global System for Mobile communications (GSM) standards, but those skilled in the art should appreciate that the present invention is in no way limited to GSM implementations.

In accordance with the present invention, mobile station 12 initiates an SMS request, which request includes or otherwise identifies a telephone number for which additional information is desired. Thus, the present invention in its broadest sense comprises a Mobile-initiated information request, which is acted on by the network 10 such that the mobile station 12 receives one or more data items in the form of an SMS response generated by the network 10 responsive to the mobile station-originated request.

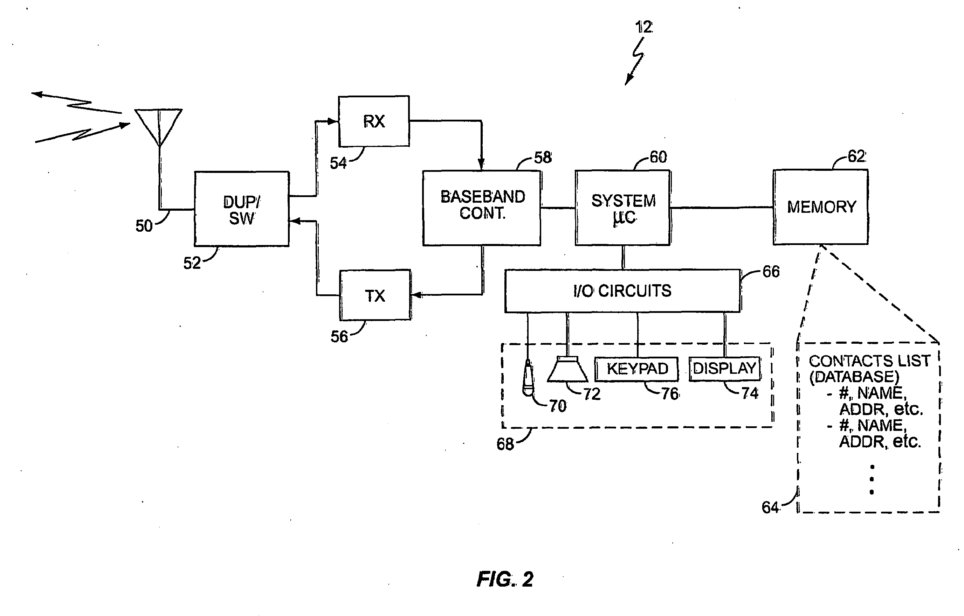

Fig. 2 illustrates a typical mobile station 12, although those skilled in the art will appreciate that the architecture of the mobile station 12 may vary significantly depending on the type of mobile station 12. The mobile station 12 illustrated in Fig. 2 is a fully functional cellular radio transceiver, the design of which is well known in the art. The mobile station 12 comprises an antenna 50, an antenna interface circuit 52, a receiver 54, a transmitter 56, a baseband controller 58, a system microcontroller or microprocessor 60, one or more memory devices or systems 62, stored information such as a contact list 64 held in memory 62, and one or more I/O circuits 66 coupling the system controller 60 to a user interface 68, which generally comprises a microphone 70, an audio speaker 72, a display 74, and a keypad 76.

In an exemplary operation, when a user of the mobile station 12 initiates an information request associated with a phone number of interest, mobile station 12 generates the appropriate SMS request including identification of the phone number of interest, receives an SMS response from the network 10 including one or more data items associated with the phone number, and updates its memory 62 with the received information. Such updating may comprise storage of the received data items in non-volatile portions of memory 62, such as a contacts list 64, or may simply include updating working memory that is used to supply information for output on the display 74. Thus, the user may request contact information and have that information displayed for temporary use, permanently stored for subsequent retrieval, or some combination thereof.

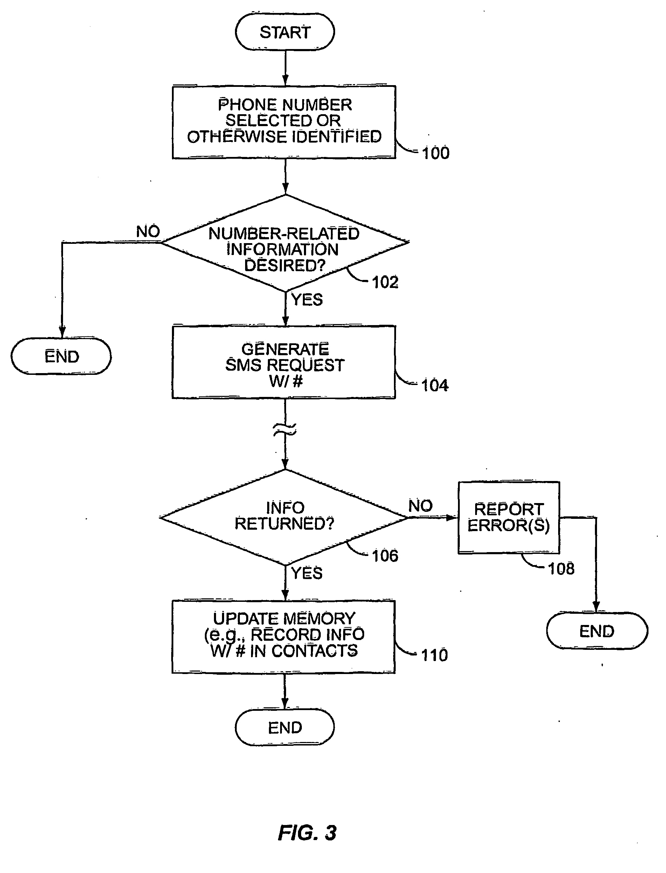

Fig. 3 illustrates the operation of the mobile station 12 in one exemplary embodiment of the invention. Fig. 3 illustrates a generalized process for initiating an SMS number information request and can be readily modified by those skilled in the art for added functionality. Processing starts with the identification or selection of a phone number of interest by the user (Step 100). If contact information is desired for the phone number (Step 102), the mobile station 12 generates an SMS request, with the generated request including or otherwise identifying the phone number of interest (Step 104). If number related information is not desired, processing ends with respect to SMS processing.

Absent errors or unavailability of information, network 10 returns an SMS message responsive to the mobile-initiated information request. Thus, based on whether the requested information is returned (Step 106), the mobile station 12 either provides an error report or some other indication to the user (Step 108), or updates its memory with the received information (Step 110). The mobile station 12 may update memory used for display output to the user and/or update the contact list 64 stored in memory 62.

As used in this discussion, the term "SMS message" should be construed broadly. For example, within GSM networks, SMS messages typically comprise 160-character text messages sent using slow speed data channels (SDCCH) that minimize network overhead and do not require allocation of dedicated data channels to the mobile stations 12. In the context of GSM, SMS messages may be sent or received concurrently with other active communications, such as during an active voice call. However, it should be understood that the present invention contemplates broad application across a range of network types, each possibly having its own specific implementations of SMS services, short text messaging services, or similar messaging services. Thus, as will be detailed later herein, the present invention may be utilized in a range of network types and messaging services. Therefore, the term "SMS message" as used herein is not limited to GSM-based details and should be given broad construction.

Message formats and the type of data transmitted and returned as part of the mobile-initiated information request of the present invention represent another area of broad variation. For example, in at least one exemplary embodiment, the request generated by mobile station 12 specifies the data format that should be used for information returned by network 10 in its response. Exemplary formats include vCard and vCalendar formats, which represent standard contact and calendaring information formats defined by the Internet Mail Consortium, which maintains an informational Web site at www.imc.org. Interested readers may obtain additional information concerning vCard in the standards documents RFC2425 and RFC2426. Similar details for the vCalendar format may be found in the standards documents RFC2445, 2446, and 2447. As defined by the Internet Mail Consortium (IMC), vCard features include the following items:
- Directory information such as name, address, e-mail address and relevant Internet Universal Resource Locators (URLs)
- Multimedia information including photographs, company logos, audio clips, etc.
- Geographic location information
- Multiple language information
Similarly, vCalendar information may include scheduling appointment information relative to Personal Information Management (PIM) functions, and may further include "to-do" information and/or other task lists. Other standard data formats that may be specified and used for returned information provided by network 10 include Geo Tag data, which provides geographic-related information. Of course, other industry standards may be used for returning response information, and proprietary data formats may be used.

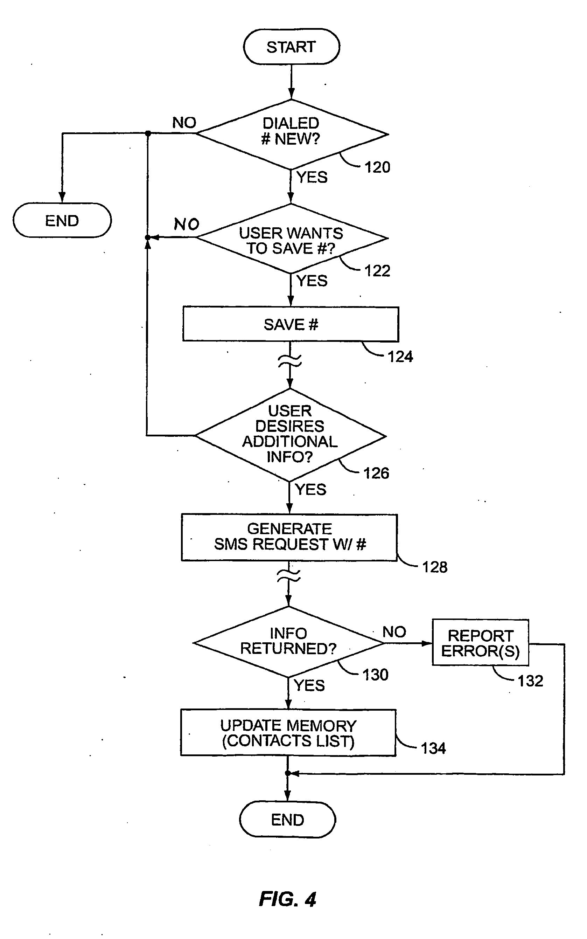

Fig. 4 illustrates an exemplary embodiment wherein the mobile station 12 assists the user in obtaining number-associated information for newly dialed telephone numbers. Processing begins with the mobile station 12 determining whether or not a number dialed by the user represents a "new" telephone number (Step 120). If the number is new, e.g., does not already exist in contact list 64, the mobile station 12 prompts the user to indicate whether the user wishes to save the telephone number (Step 122). Processing ends if the user does not wish to save the number, but if such storage is desired, mobile station 12 stores the number in memory 62, which may comprise generating a new contact record in the contacts list 64 stored in a non-volatile portion of memory 62 (Step 124).

At an appropriate time after saving the number, the mobile station 12 queries the user as to whether additional contact information is desired (Step 126). For example, the mobile station 12 may wait until the end of the call to avoid distracting the user while the call is active. If the user indicates that additional information is desired, the mobile station 12 generates the appropriate SMS request that identifies or otherwise indicates the number of interest (Step 128) and transmits the request to the network as described above.

If the network 10 does not return information responsive to the request (Step 130), the mobile station 12 may report errors to the user as appropriate (Step 132), such as by displaying an error indicator on display 74. In at least some embodiments, the mobile station 12 maintains a response timer such that an error report is generated if the network 10 fails to respond to the request within a predetermined amount of time.

If the network 10 does return information, mobile station 12 may take any number of actions, including updating memory 62 by storing the returned information in a record associated with the phone number in the contacts list 64 (Step 134). In this respect, the database systems 22 or 24 accessed by SMSC 20 may comprise directory listing information, such as a "Yellow" or "White" pages database. In this manner, the user of mobile station 12 has the advantage of an automatically generated contact listing entry for a newly dialed number that includes whatever detailed directory information is available in network 10 for that number.

Generally, then, the present invention comprises a mobile-initiated SMS request for number-related data that allows the user of mobile station 12 to access and receive a variety of information associated with the phone number of interest. In one sense, this functionality provides the user with a fully featured "Reverse Directory Information" service, in which the user enters a number and receives from network 10 one or more data items associated with that number. While such data items have been identified as vCards and vCalendars and/or directory listing information, the present invention is not limited to such data items. Indeed, the number of interest may be a commercial number with which the associated vendor has enabled the delivery of coupons, which may be used by the user for purchasing goods or services from the vendor associated with the number of interest. Such coupons may be returned to the mobile station 12 in a variety of formats and stored in memory 62 for later presentation to the business in question. Indeed, the present invention further includes, in at least some embodiments, additional features that are of particular interest for commercial applications.

In one such embodiment, where the mobile station 12 originates a query associated with a commercial number, the vendor associated with that number is provided information regarding the identity and/or location of the requesting party so that it may more particularly target its advertising. Of course, the amount of identifying information released by the network 10 to a vendor associated with such queries may be controlled in accordance with any number of privacy policies implemented by the network service provider in association with agreed upon standards for release approved by individual users of mobile stations 12.

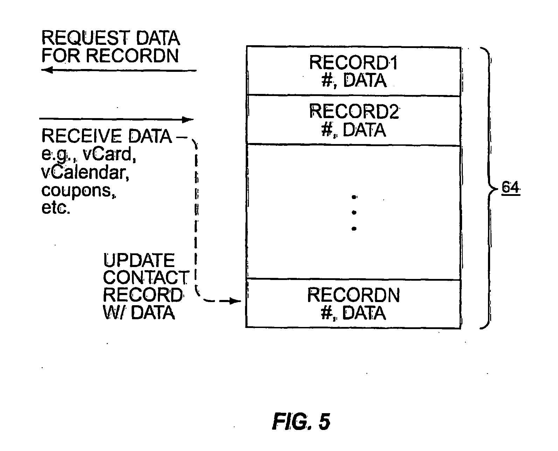

With the above variations in mind, Fig. 5 illustrates a generalized exemplary request/response operation, wherein the mobile station 12 originates the SMS request for data associated with an identified telephone number, and receives one or more data items from network 10 in a corresponding SMS response message. As previously discussed, such data items may comprise, but are not limited to, vCards, vCalendars, coupons, business descriptions, geographic information, detailed directions, restaurant menus, etc.

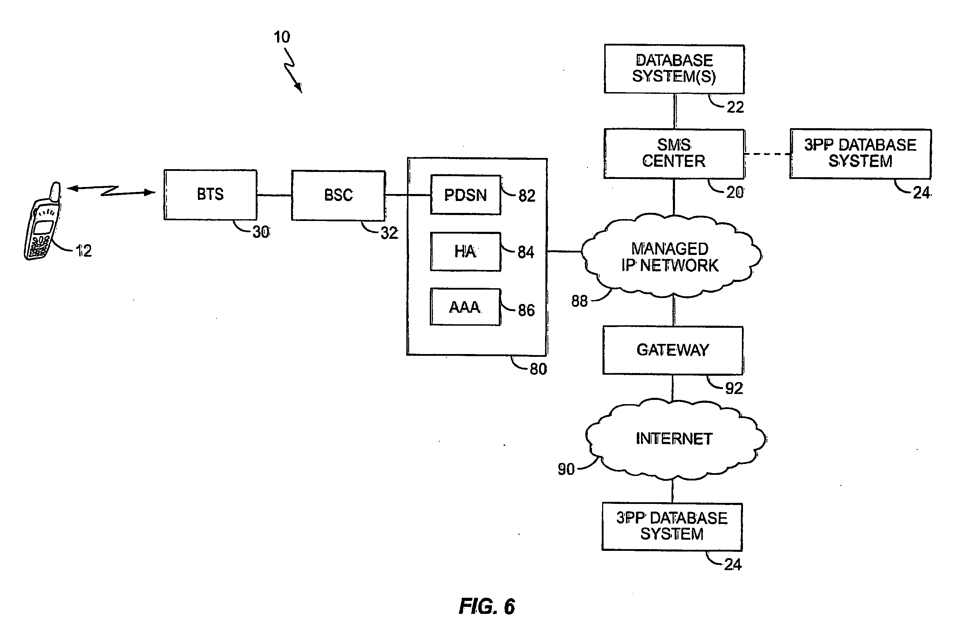

In addition to the many variations that may be practiced as regards generation of the request and formatting of the data and type of data that may be returned in the corresponding result, the present invention may be practiced across a wide variety of networks. Although the discussion began with an illustration of the present invention as might be practiced in a GSM-type network, Fig. 6 illustrates wireless communication network 10 implemented based on cdma2000 standards. Thus, the SMS-based messaging supporting the mobile-initiated number information request in accordance with the present invention may be implemented in packet data IP-based networks. Here, network 10 comprises the BTS 30, BSC 32, SMS-C 20, and database systems 22 and 24 as shown earlier in Fig. 1, although it should be understood that such entities are appropriately reconfigured for operation in accordance with the relevant CDMA standards.

Here, a Packet Core Network (PCN) 80, which comprises a Packet Data Serving Node (PDSN) 82, a Home Agent (HA) 84, and an Access Authorization Authentication (AAA) server 86, communicatively couples the mobile station 12 to a Managed IP Network 88, which couples to the Internet 90 through a gateway router 92. As illustrated, number-related information may be obtained by the network 10 using one or more of its own database systems 22, or may be obtained in cooperation with Third-Party Provider (3PP) database system 24, which may be coupled directly or indirectly to the SMS-C 20, or may be accessible to network 10 via the Internet 90.

As the above discussion and accompanying diagrams illustrate, the present invention is adaptable to a variety of network types and data formats. As such, the present invention is not limited by the exemplary details contained herein, but rather is limited only by the following claims.

## Claims

1. A method at a wireless mobile station (12) of obtaining directory information from a wireless communication network (10) for a phone number comprising:
determining by the mobile station that a contacts database (64) maintained at the mobile station (12) lacks directory information for a phone number input to the mobile station (12);
selectively transmitting a short-messaging request to the network (10) requesting directory information for the phone number responsive to the step of determining;
receiving a short-messaging response from the network (10) including directory information for the phone number; and
updating the contacts database (64) based on the directory information included in the short-messaging response.

2. The method of claim 1, wherein determining that a contacts database (64) maintained at the mobile station (12) lacks directory information for a phone number input to the mobile station (12) comprises recognizing that a phone number input to the mobile station (12) is not stored in the contacts database (64).

3. The method of claim 1, wherein determining that a contacts database (64) maintained at the mobile station (12) lacks directory information for a phone number input to the mobile station (12) comprises recognizing that directory information stored in the contacts database (64) for the phone number is incomplete.

4. The method of claim 1, wherein determining that a contacts database (64) maintained at the mobile station (12) lacks directory information for a phone number input to the mobile station (12) comprises recognizing that no directory information currently is stored in the contacts database (64) for the phone number.

5. The method of claim 1, further comprising evaluating the contacts database (64) to identify phone numbers stored in the contacts database (64) that have incomplete directory information, and performing the steps of transmitting, receiving, and updating for the identified phone numbers.

6. The method of claim 1, wherein selectively transmitting a short-messaging request to the network (10) requesting directory information for the phone number responsive to the step of determining comprises prompting a user to indicate whether directory information for the number is desired by the user, and determining whether to transmit the short-messaging request responsive to the indication.

7. The method of claim 1, further comprising configuring the short-messaging request to identify the data format to be used for returning directory information to the mobile station (12).

8. The method of claim 1, further comprising configuring the short-messaging request as a vCard request message, such that the directory information returned for the phone number is in a vCard format.

9. The method of claim 1, wherein the phone number corresponds to a restaurant; and further comprising receiving menu information for the restaurant from the network (10), and displaying the menu information to a user of the mobile station (12).

## Patentansprüche

1. Ein Verfahren bei einer drahtlosen Mobilstation (12) eines Erhaltens von Verzeichnisinformation von einem drahtlosen Kommunikationsnetzwerk (10) für eine Telefonnummer, umfassend:
Bestimmen bei der Mobilstation, dass eine Kontaktdatenbank (64), aufrechterhalten bei der Mobilstation (12), keine Verzeichnisinformation für eine Telefonnummer aufweist, die an die Mobilstation (12) eingegeben wird;
selektives Übertragen einer Kurznachricht-Anforderung an das Netzwerk (10), die Verzeichnisinformation für die Telefonnummer anfordert, in Ansprechen auf den Schritt eines Bestimmens;
Empfangen einer Kurznachricht-Antwort von dem Netzwerk (10) mit Verzeichnisinformation für die Telefonnummer; und
Aktualisieren der Kontaktdatenbank (64) auf Grundlage der Verzeichnisinformation, enthalten in der Kurznachricht-Antwort.

2. Verfahren nach Anspruch 1, wobei Bestimmen, dass eine Kontaktdatenbank (64), aufrechterhalten bei der Mobilstation (12), keine Verzeichnisinformation für eine Telefonnummer aufweist, die eingegeben wird an die Mobilstation (12), umfasst Erkennen, dass eine Telefonnummer, eingegeben von der Mobilstation (12), nicht in der Kontaktdatenbank (64) gespeichert ist.

3. Das Verfahren nach Anspruch 1, wobei Bestimmen, dass eine Kontaktdatenbank (64), aufrechterhalten bei der Mobilstation (12), keine Verzeichnisinformation für eine Telefonnummer aufweist, die eingegeben wird an die Mobilstation (12), umfasst Erkennen, dass Verzeichnisinformation, gespeichert in der Kontaktdatenbank (64), für die Telefonnummer unvollständig ist.

4. Das Verfahren nach Anspruch 1, wobei Bestimmen, dass eine Kontaktdatenbank (64), aufrechterhalten bei der Mobilstation (12), keine Verzeichnisinformation für eine Telefonnummer aufweist, die eingegeben wird an die Mobilstation (12), umfasst Erkennen, dass keine Verzeichnisinformation gegenwärtig gespeichert wird in der Kontaktdatenbank (64) für die Telefonnummer.

5. Das Verfahren nach Anspruch 1, ferner umfassend Evaluieren der Kontaktdatenbank (64) zum Identifizieren von Telefonnummern, die in der Kontaktdatenbank (64) gespeichert sind, die unvollständige Verzeichnisinformation aufweist, und Ausführen der Schritte eines Übertragens, Empfangens und Aktualisierens für die identifizierten Telefonnummern.

6. Das Verfahren nach Anspruch 1, wobei ein selektives Übertragen einer Kurznachricht-Anforderung an das Netzwerk (10), die Verzeichnisinformation für die Telefonnummer anfordert, in Ansprechen auf den Schritt eines Bestimmens umfasst, Auffordern eines Benutzers zum Anzeigen, ob Verzeichnisinformation für die Nummer gewünscht wird durch den Benutzer, und Bestimmen, ob die Kurznachricht-Anforderung, ansprechend auf die Anzeige, zu übertragen ist.

7. Das Verfahren nach Anspruch 1, ferner umfassend Konfigurieren der Kurznachricht-Anforderung zum Identifizieren des Datenformats, das zu verwenden ist für ein Zurückgeben von Verzeichnisinformation an die Mobilstation (12).

8. Das Verfahren nach Anspruch 1, ferner umfassend Konfigurieren der Kurznachricht-Anforderung als eine vCard-Anforderungsnachricht, so dass die Verzeichnisinformation, die für die Telefonnummer zurückgegeben wird, in einem vCard-Format ist.

9. Das Verfahren nach Anspruch 1, wobei die Telefonnummer einem Restaurant entspricht; und ferner umfassend Empfangen von Menüinformation für das Restaurant von dem Netzwerk (10), und Anzeigen der Menüinformation an einen Benutzer der Mobilstation (12).

## Revendications

1. Procédé qui permet, au niveau d'une station mobile sans fil (12), d'obtenir des informations de répertoire à partir d'un réseau de communication sans fil (10) pour un numéro de téléphone, comprenant le fait de:
Déterminer, par la station mobile, qu'une base de données (64) de contacts maintenue au niveau de la station mobile (12) manque d'informations de répertoire à propos d'un numéro de téléphone introduit à la station mobile (12);
transmettre de manière sélective une demande en messagerie SMS au réseau (10) demandant des informations de répertoire pour le numéro de téléphone en réponse à l'étape de détermination;
recevoir une réponse en messagerie SMS provenant du réseau (10) incluant des informations de répertoire pour le numéro de téléphone; et
mettre à jour la base de données (64) de contacts sur la base des informations de répertoire incluses dans la réponse en messagerie SMS.

2. Procédé de la revendication 1, dans lequel le fait de déterminer qu'une base de données (64) de contacts maintenue au niveau de la station mobile (12) manque d'informations de répertoire à propos d'un numéro de téléphone introduit à la station mobile (12) comprend le fait de reconnaître qu'un numéro de téléphone introduit à la station mobile (12) n'est pas stocké dans la base de données (64) de contacts.

3. Procédé de la revendication 1, dans lequel le fait de déterminer qu'une base de données (64) de contacts maintenue au niveau de la station mobile (12) manque d'informations de répertoire à propos d'un numéro de téléphone introduit à la station mobile (12) comprend le fait de reconnaître que les informations de répertoire stockées dans la base de données (64) de contacts pour le numéro de téléphone sont incomplètes.

4. Procédé de la revendication 1, dans lequel le fait de déterminer qu'une base de données (64) de contacts maintenue au niveau de la station mobile (12) manque d'informations de répertoire à propos d'un numéro de téléphone introduit à la station mobile (12) comprend le fait de reconnaître qu'aucune information de répertoire n'est actuellement stockée dans la base de données (64) de contacts pour le numéro de téléphone.

5. Procédé de la revendication 1, comprenant en plus le fait d'évaluer la base de données (64) de contacts pour identifier des numéros de téléphone stockés dans la base de données (64) de contacts qui ont des informations de répertoire incomplètes, et le fait d'effectuer les étapes de transmission, de réception, et de mise à jour des numéros de téléphone identifiés.

6. Procédé de la revendication 1, dans lequel le fait de transmettre de manière sélective une demande en messagerie SMS au réseau (10) demandant les informations de répertoire pour le numéro de téléphone en réponse à l'étape de détermination comprend le fait solliciter un utilisateur pour qu'il indique s'il souhaite les informations de répertoire pour le numéro, et le fait de déterminer s'il faut transmettre la demande en messagerie SMS en réponse à l'indication.

7. Procédé de la revendication 1, comprenant en plus le fait de configurer la demande en messagerie SMS pour identifier le format de données à utiliser pour renvoyer les informations de répertoire à la station mobile (12).

8. Procédé de la revendication 1, comprenant en plus le fait de configurer la demande en messagerie SMS comme un message de demande vCard, de telle sorte que les informations de répertoire renvoyées au numéro de téléphone soient au format vCard.

9. Procédé de la revendication 1, dans lequel le numéro de téléphone correspond à un restaurant, et comprend en plus le fait de recevoir des informations sur le menu pour le restaurant à partir du réseau (10), et le fait d'afficher les informations sur le menu à un utilisateur de la station mobile (12).
